# EUROPEAN PATENT APPLICATION

(11) **EP 2 429 150 A1**
(43) Date of publication of application: **14.03.2012**
(21) Application number: 09844283.3
(22) Date of filing: 25.09.2009
(51) Int. Cl.: H04L 29/08

(54) **APPARATUS, WEB SERVICE COMPONENT AND METHOD BASED ON WEB SERVICE**

(30) Priority: 07.05.2009 CN 200910138373
(71) Applicant: ZTE Corporation, Shenzhen, Guangdong 518057 (CN)
(72) Inventor: CUI, Baochang, Guangdong 518057 (CN)
(74) Representative: Bokinge, Ole
(86) International application number: PCT/CN2009/074218
(87) International publication number: WO 2010/127531

(57) **Abstract**

The present invention provides an apparatus based on a Web Service, said apparatus is configured in the Web Service equipment side and includes a Hypertext Transfer Protocol (HTTP) module and an Integrated Management Port (IMP) module which are interconnected and independently operate, wherein, the HTTP module is based on the HTTP protocol to send and receive an Extensible Markup Language (XML) message between a Web Service equipment and the correspondent Web Service equipment; the IMP module implements the integrated management on messages of the Web Service equipment, constructs the XML message which is sent to the correspondent Web Service equipment and analyzes the XML message which is sent by the correspondent Web Service equipment. The apparatus, Web Service component, and method based on Web Service in accordance with the present invention can implement fast fault location and the controllability on the program security of the developers.

## Description

### Technical Field

The present invention relates to applications of the computer communication technique, and particularly, to an apparatus, Web Service component and method based on a Web Service way.

### Background of the Related Art

With the flourish of the short message value-added services, competition among the companies is becoming fierce, major domestic operators are all actively expanding their market shares, mature computer communication techniques are constantly used, and the Web Service technique is generated, developed and used in this context. The Web Service technique refers to an interface which is able to use Extensible Markup Language (XML) messages and is accessed through the network, this Interface describes a set of accessible operations, thus higher requirements for service providers are presented, developing a Web Service way based Distributed Control System (DCS) is imminent, and a common method is to develop Web Service application programs based on Simple Object Access Protocol (SOAP, providing a mechanism of communicating between the Web Service and other application programs) open source tools.

Advantages: when the SOAP open source tools are applied to develop Web Service, the development of application programs is easier, all the coding and encoding works related to the SOAP protocol are done by the SOAP, and the application programs only need to pay attention to the relevant service processing.

Disadvantages: locating and solving faults are more difficult, and if problems arise in the application programs, the solution is relatively easy, however when the problem occurs in the SOAP open source code, the fault location becomes relatively difficult. If it needs to solve this problem, the SOAP code requires deeply studying, and a workload is larger. Besides, for different system requirements, different application interfaces should be developed, which increases the development cycle and decreases the security and stability.

Therefore, how to provide a method for improving expandability and universality of the DCS system and providing a flexible integrated management access port for external systems is a problem to be solved urgently.

### Summary of the Invention

The technical problem to be solved in the present invention is to provide an apparatus, Web Service component and method based on a Web Service so as to implement integrated management ports and implement fast fault location.

To solve the above technical problem, the present invention provides an apparatus based on a Web Service, also known as an integrated management port machine, which comprises a Hypertext Transfer Protocol (HTTP) module and an Integrated Management Port (IMP) module that are interconnected and operate independently, wherein,
said HTTP module is configured to: send and receive an Extensible Markup Language (XML) message between the apparatus based on the Web Service and a correspondent apparatus based on the Web Service based on a HTTP protocol;
said IMP module is configured to: implement integrated management on the XML message of said apparatus based on the Web Service, construct the XML message sent to the correspondent apparatus based on the Web Service, and analyze the XML message sent from the correspondent apparatus based on the Web Service;
wherein said apparatus based on the Web Service is configured in a Web Service equipment side, thereby implementing an integrated management port.

Furthermore, said IMP module is configured with an integrated management configuration file, and constructs or analyzes the XML message according to said integrated management configuration file, and
said integrated management configuration file is defined in a format of an XML file and is obtained after analyzing an XML language file describing Web Service information, namely, a WSDL file.

Furthermore, said HTTP module comprises a Simple Object Access Protocol (SOAP) sub module and an XML sub-module, wherein said SOAP sub-module is configured to: encapsulate messages based on a SOAP protocol and implement data communication based on the HTTP protocol;
said XML module is configured to transfer said XML sub module to implement an analysis function of messages.

Furthermore, said HTTP module comprises a Simple Object Access Protocol (SOAP) sub module, wherein said SOAP sub module is configured to: encapsulate messages based on a SOAP protocol and implement data communication based on the HTTP protocol;
said IMP module comprises an XML sub module, wherein said XML sub module operates independently and is configured to implement construction and analysis functions of messages.

In order to solve the above technical problem, the present invention further provides an apparatus based on a Web Service, also can be known as an integrated management port machine, which comprises a Hypertext Transfer Protocol (HTTP) module and an Integrated Management Port (IMP) module which are interconnected and operate independently, wherein,
said HTTP module is configured to: receive a message sent from a correspondent equipment and forward the message to said IMP module, and also configured to: receive a message processed by said IMP module and forward the message processed by said IMP module to said correspondent equipment;
said IMP module is configured with an integrated management configuration file, and said IMP module is configured to: receive a message sent from a local equipment, construct an Extensible Markup Language (XML) message according to said integrated management configuration file, and forward the XML message to said HTTP module; and also configured to: receive the message forwarded by said HTTP module and analyze the message sent by said HTTP module according to said integrated management configuration file;
said integrated management configuration file is an XML format file defined according to an XML language file describing Web service information, namely, a WSDL file,
thereby implementing an integrated management port.

Furthermore, said HTTP module comprises a Simple Object Access Protocol (SOAP) sub module and an XML sub module, wherein the SOAP sub module is configured to: encapsulate messages based on a SOAP protocol and implement data communication based on a HTTP protocol;
said IMP module is configured to: transfer said XML sub module to implement an analysis function of messages.

In order to solve the above technical problem, the present invention further provides a Web Service component, the Web Service component comprising a Web Service equipment and an apparatus based on a Web Service, wherein,
said apparatus based on the Web Service comprises a Hypertext Transfer Protocol (HTTP) module and an Integrated Management Port (IMP) module which are interconnection and operate independently, and said Web Service equipment connects with said IMP module, wherein,
said HTTP module is configured to: receive a messages sent from a correspondent Web Service equipment and forward the message to said IMP module, and also configured to: receive a message processed by said IMP module and forward the message processed by said IMP module to said correspondent Web Service equipment;
said IMP module is configured with an integrated management configuration file, and said IMP module is configured to receive the message sent from said Web Service equipment, and construct an Extensible Markup Language (XML) message according to said integrated management configuration file, and forward the XML message to said HTTP module; and also configured to: receive the message forwarded by said HTTP module and analyze the message sent by said HTTP module according to said integrated management configuration file;
said integrated management configuration file is an XML format file defmed according to an XML language file describing Web Service information, namely a WSDL file.

Furthermore, said HTTP module comprises a Simple Object Access Protocol (SOAP) sub module and an XML sub module, wherein said SOAP sub-module is configured to: encapsulate messages based on a SOAP protocol and implement data communication based on a HTTP protocol;
said IMP module is configured to transfer said XML sub module to complete an analysis function of messages.

Furthermore, said Web Service equipment is a service provider or a service requester.

In order to solve the above technical problem, the present invention further provides a method for implementing a Web Service, and the method comprises:
an Integrated Management Port (IMP) module constructing an Extensible Markup Language (XML) message according to a configured integrated management configuration file obtained according to a WSDL file, and sending the XML message to a Hypertext Transfer Protocol (HTTP) module;
said HTTP module performing a Simple Object Access Protocol (SOAP) encapsulation on received said XML message constructed by said IMP module and sending said XML message to a correspondent equipment based on a Hypertext Transfer Protocol (HTTP); said HTTP module receiving an XML message sent from the correspondent equipment based on the HTTP protocol and forwarding the XML message to said IMP module; and
said IMP module analyzing said XML message sent by said correspondent equipment and forwarded by said HTTP module according to the integrated management configuration file.

Compared with the prior art, the apparatus (also known as the integrated management port machine), Web Service component and method based on the Web Service in accordance with the present invention can well solve the problems in software security and the testing personnel can quickly locate the crucial fault location to solve the fault by reasonably dividing the module functions. The present invention can implement the construction and analysis of XML messages according to the configured integrated configuration file instead of developing communication and analysis modules over again in the subsequent Web Services with different function requirements in the same system, and the programmers only need to modify the XML format file when encountering such problem instead of developing the relevant modules, which greatly improves the program utilization efficiency, reduces development costs, and enhances system the stability and expandability. The present invention can be implemented in the premise without changing the original network architecture, and thus has the strong flexibility, compatibility and stability.

### Brief Description of Drawings

FIG. 1 is a flow chart of the interface message based on the Web Service way.
FIG. 2 is a schematic diagram of the module structure of the apparatus based on the Web Service (also known as the integrated management port machine) in accordance with the present invention.
FIG. 3 is a flow chart of the method for implementing the Web Service in accordance with the present invention.

### Preferred Embodiments of the Present Invention

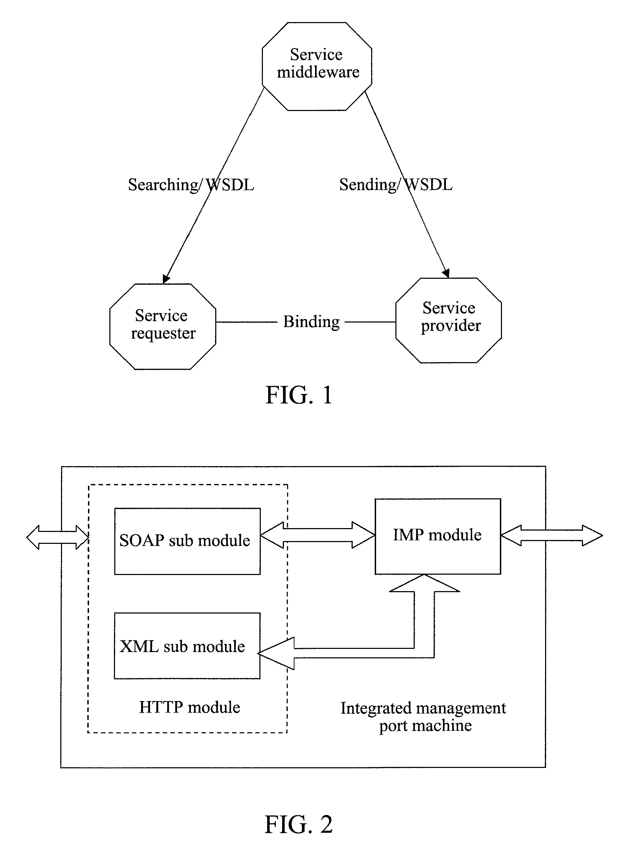

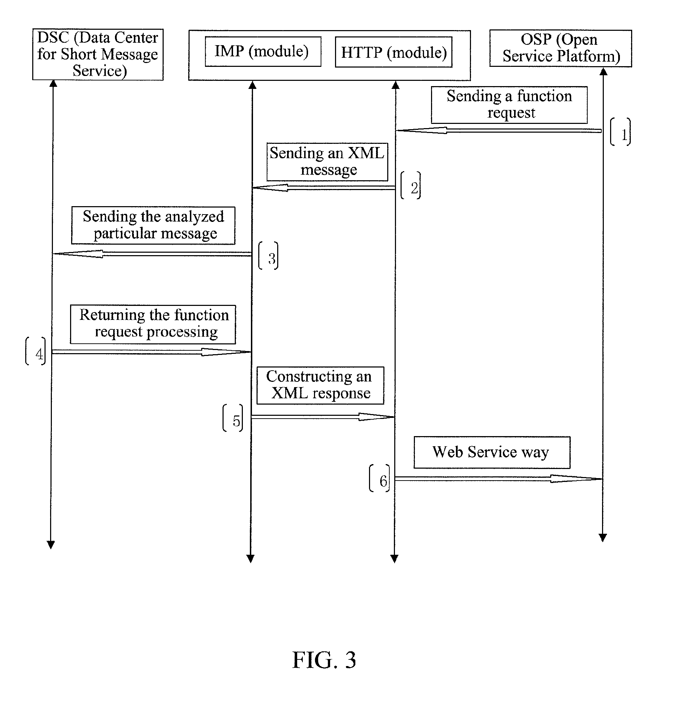

As shown in FIG. 1, the Web Service system using the apparatus based on the Web Service in the present invention comprises the service requester, the service provider and the service middleware, which can implement operations such as sending, searching and binding and so on, wherein,
the service requester is for: detecting Web services, and then transferring these services to create the application programs, and the application programs are described by the service description language, and the description information is sent by the middleware. The particular applications are implemented by the Open Service Platform (OSP) in FIG. 3.

The service provider is for: providing service ports and maintaining the registry to make the services remain in the available state. The particular applications can be implemented by the Data Center for Short Message Service (DCS).

The service middleware, namely the apparatus based on the Web Service (also known as the integrated management port machine) of the present invention, is: the medium between the service provider and the service requester, and is the relay station for receiving/forwarding the request message/response message. The service middleware can be implemented in the service provider side and/or service requester side.

In the present invention, the service middleware in the service requester side and the service middleware in the service provider side are correspondent to each other, and the equipment in the service middleware implementation side is called as the local equipment, for example, the service middleware in the service provider side is taken as an example, the service provider is the local equipment, and the service requester is the correspondent side equipment.

As shown in FIG. 2, the apparatus based on the Web Service (also known as the integrated management port machine) in the present invention comprises the Hypertext Transfer Protocol module (HTTP module) and the IMP module being connected to each other and operating independently, and the detailed information is as follows:
the HTTP module is used to send and receive the messages between the local equipment and the correspondent equipment based on the HTTP protocol, and the message encapsulates with the interconnected Simple Object Access Protocol sub module (SOAP sub module) and Extensible Markup Language (XML) sub module, wherein,
the SOAP sub module is used to process the high-speed switch of data packets of the data communication between network communications and encapsulate the interworking messages based on the SOAP protocol, and is also used to encrypt the data packets and use a dedicated encryption protocol to recover encrypted data packets to the XML file format message bodies that can be analyzed, so that the HTTP module can normally receive and send the XML message bodies of the Web Service way, and the sending and receiving of the XML message bodies of the Web Service way can be implemented through the remote access interface provided by the HTTP module;
the particular functions of the SOAP sub module are embodied in: receiving the messages sent from the correspondent equipment and forwarding the messages to the IMP module; also performing the SOAP encapsulation on the messages processed by the IMP module and then sending the messages to the correspondent equipment;
the XML sub-module is used to analyze the XML message bodies received by the SOAP module;
the Integrated Management Port (IMP) module is configured with the integrated management configuration file, it is a design architecture of integrated and centralized management of the messages, which mainly implement the separation and independent development of the application program and the network communication module (which refers to the HTTP module) so as to solve the system stability and expandability;
the particular functions of the IMP module are embodied in: receiving messages sent from the HTTP module, transferring the XML sub module according to the integrated management configuration file to analyze the particular content of the message and sending the message to the local equipment; also receiving the messages sent by the local equipment, constructing XML messages according to the message content and the integrated management configuration file and sending the XML messages to the HTTP module;
the integrated management configuration file is a file defined in the format of the XML file after analyzing the WSDL file, and the flexibility, simplicity and usability of the XML are the first targets to address the problems in the system compatibility.

Sending: the service provider judging whether to send the message or not through the middleware.

Searching: the searching operation is implemented together by the service requester and the service middleware. The service requester describes the type of services to be looking for by the service requester, and the service middleware issuing the result best matching with the request.

Binding: the binding operation happens between the service requester and the service provider. The requester can access and transfer the services provided by the provider after the proper negotiation between these two parties.

The Web Services Description Language (WSDL) is an XML language for describing the Web Service information and provides a unified method for describing the Web Service to other programs; it mainly describes the message content and defines the standard format for describing the Web Service interface specification.

The present invention also provides a Web Service component, the Web Service component comprises a Web Service equipment and an apparatus based on the Web Service (also known as the integrated management port machine), the apparatus comprises the Hypertext Transfer Protocol (HTTP) module and Integrated Management Port (IMP) module which are interconnected and operate independently, the Web Service equipment connects with the IMP module, and the module structure of the integrated management port machine is as above description.

The Web Service equipment is the service provider or the service requester, and accordingly, the Web Service correspondent equipment is the service requester or the service provider.

The following illustrate by taking the service provider side implementing the integrated management port machine in the present invention as example:
the following takes the OSP as the service provider and the DCS as the service provider to illustrate the Web Service process in the Web Service way, as shown in FIG. 3, the complete message flow of this Web Service way involves: the DCS module, the IMP module, the HTTP module, and the Open Service Platform (OSP), and process of the Web Service way comprises the following steps:
   step 1: the OSP acting as the service requester takes the Web Service way to send the service request message to the service port externally provided by the service provider DCS system, namely the apparatus based on the Web Service (also known as the integrated management port machine) in the present invention, and constructs the message content in the XML format;
   step 2: the apparatus based on the Web Service starts the HTTP module to receive the request message sent by the service requester, and forwards the message to the IMP module of the service middleware in the XML structure format;
   step 3: the IMP module of the service middleware receives the messages constructed with the XML, transfers the XML sub module according to the integrated management configuration file to analyze the particular message content, and forwards the message content to the particular message function implementation module of the service provider DCS;
   step 4: the service provider DCS receives the detailed message content parameters analyzed by the IMP module of the service middleware, configures the corresponding functions according to the parameters, and returns the processing result of the IMP request function message and the response message;
   step 5: one IMP module of the service middleware constructs the XML response message according to the response message content and the configured integrated management configuration file after receiving the result responding by the service provider DCS module to the message for requesting the OSP function of the service requester, and sends the XML response message to the HTTP module of the service middleware;
   step 6: the SOAP sub-module performs the encapsulation after the HTTP module of the service middleware receiving the response message constructed in the XML format by the IMP, and returns the response message in the Web Service way to the service requester OSP.

When the service requester OSP receives the response message and performs the response processing, so far, a complete request/response function in the Web Service way ends completely.

The apparatus based on the Web Service (also known as the integrated management port machine) in the present invention uses the IMP architecture based on the Web Service in combination with the HTTP and XML techniques to perform standardization, integrated plan and design on the Data Center for Short Message Service (DCS) data processing port machine, thereby improving the maintainability and universality of the DCS port machine system.

Since the receiving/sending message is implemented by the SOAP sub module encapsulating the SOAP message and according to the HTTP protocol and the XML module implements the decoding work, the communication and decoding modules not only have clear own functions but also keep in close relation and are encapsulated in one HTTP module operating independently. The integrated management port machine, Web Service component and method in accordance with the present invention can well solve the problems in software security and the testing personnel can quickly locate the crucial fault location to solve the fault by reasonably dividing the module functions, and the developers have the controllability on the program security. Since the operators implement different functions on the basis of the Web Service way, there is no need to develop communication and analysis modules in the subsequent Web Service with different function requirements in the same system, the programmers only need to modify the XML format integrated configuration when encountering such problem instead of developing the relevant modules over again , which will greatly reduce the programming time and improve the quality by the programmers, and greatly improves the program utilization efficiency at the same time, reduce development costs, and enhance system stability and expandability. The present invention can be implemented in the premise without changing the original network architecture, and thus has the strong flexibility, compatibility and stability.

In conclusion, the present invention provides a simple and practical solution, HTTP + XML protocol + IMP application programs, for the Web Service function development to be able to perform the Web Service function development, which implements the controllability on the program security risks of the developer, and since both the HTTP protocol and the XML protocol are commonly used communication protocols and they are easy to be used and understood, the present invention just takes advantage of this feature to use the combination of these two protocols to develop and implement the Web Service function.

The above description is the preferable embodiment and system framework of the present invention rather than the restriction on the protection scope of the present invention. Various corresponding modifications and transformations can be made on the present invention for those skilled in the art without departing from the spirit and essentiality of the present invention. For example, the HTTP module only encapsulates the SOAP sub module, the IMP module encapsulates the XML sub module, and the XML sub module operates independently for implementing the construction and analysis of the messages. However, such corresponding modification and transformations shall all fall into the protection scope of the appended claims of the present invention.

### Industrial Applicability

Compared with the prior art, the apparatus, Web Service component and method based on Web Service in accordance with the present invention can well solve the problems in software security and the testing personnel can quickly locate the crucial fault location to solve the fault by reasonably dividing the module functions. The present invention can implement the construction and analysis of XML messages according to the configured integrated management configuration file instead of developing communication and analysis modules over again in the subsequent Web Services with different function requirements in the same system, and the programmers only need to modify the XML format file when encountering such problem instead of developing the relevant modules, which greatly improves the program utilization efficiency, reduces development costs, and enhances the system stability and expandability. The present invention can be implemented in the premise without changing the original network architecture, and thus has the strong flexibility, compatibility and stability.

## Claims

1. An apparatus based on a Web Service, which comprises a Hypertext Transfer Protocol (HTTP) module and an Integrated Management Port (IMP) module that are interconnected and operate independently, wherein,
said HTTP module is configured to: send and receive an Extensible Markup Language (XML) message between the apparatus based on the Web Service and a correspondent apparatus based on the Web Service based on a HTTP protocol;
said IMP module is configured to: implement integrated management on the XML message of said apparatus based on the Web Service, construct the XML message sent to the correspondent apparatus based on the Web Service, and analyze the XML message sent from the correspondent apparatus based on the Web Service;
wherein said apparatus based on the Web Service is configured in a Web Service equipment side, thereby implementing an integrated management port.

2. The apparatus of claim 1, wherein,
said IMP module is configured with an integrated management configuration file,
said XML message is constructed or analyzed according to said integrated management configuration file, and
said integrated management configuration file is defined in a format of an XML file and is obtained after analyzing an XML language file describing Web Service information, namely, a WSDL file.

3. The apparatus of claim 2, wherein,
said HTTP module comprises a Simple Object Access Protocol (SOAP) sub module and an XML sub-module, wherein said SOAP sub-module is configured to: encapsulate messages based on a SOAP protocol and implement data communication based on the HTTP protocol;
said XML module is configured to transfer said XML sub module to implement an analysis function of messages.

4. The apparatus of claim 2, wherein,
said HTTP module comprises a Simple Object Access Protocol (SOAP) sub module, wherein said SOAP sub module is configured to: encapsulate messages based on a SOAP protocol and implement data communication based on the HTTP protocol;
said IMP module comprises an XML sub module, wherein said XML sub module operates independently and is configured to implement construction and analysis functions of messages.

5. An apparatus based on a Web Service, which comprises a Hypertext Transfer Protocol (HTTP) module and an Integrated Management Port (IMP) module which are interconnected and operate independently, wherein,
said HTTP module is configured to: receive a message sent from a correspondent equipment and forward the message to said IMP module, and also configured to: receive a message processed by said IMP module and forward the message processed by said IMP module to said correspondent equipment;
said IMP module is configured with an integrated management configuration file, and said IMP module is configured to: receive a message sent from a local equipment, construct an Extensible Markup Language (XML) message according to said integrated management configuration file, and forward the XML message to said HTTP module; and also configured to: receive the message forwarded by said HTTP module and analyze the message sent by said HTTP module according to said integrated management configuration file;
said integrated management configuration file is an XML format file defined according to an XML language file describing Web service information, namely, a WSDL file,
thereby implementing an integrated management port.

6. The apparatus of claim 5, wherein,
said HTTP module comprises a Simple Object Access Protocol (SOAP) sub module and an XML sub module, wherein the SOAP sub module is configured to: encapsulate messages based on a SOAP protocol and implement data communication based on a HTTP protocol;
said IMP module is configured to: transfer said XML sub module to implement an analysis function of messages.

7. A Web Service component, the Web Service component comprising a Web Service equipment and an apparatus based on a Web Service, wherein,
said apparatus based on the Web Service comprises a Hypertext Transfer Protocol (HTTP) module and an Integrated Management Port (IMP) module which are interconnection and operate independently, and said Web Service equipment connects with said IMP module, wherein,
said HTTP module is configured to: receive a messages sent from a correspondent Web Service equipment and forward the message to said IMP module, and also configured to: receive a message processed by said IMP module and forward the message processed by said IMP module to said correspondent Web Service equipment;
said IMP module is configured with an integrated management configuration file, and said IMP module is configured to receive the message sent from said Web Service equipment, and construct an Extensible Markup Language (XML) message according to said integrated management configuration file, and forward the XML message to said HTTP module; and also configured to: receive the message forwarded by said HTTP module and analyze the message sent by said HTTP module according to said integrated management configuration file;
said integrated management configuration file is an XML format file defined according to an XML language file describing Web Service information, namely a WSDL file.

8. The Web Service component of claim 7, wherein,
said HTTP module comprises a Simple Object Access Protocol (SOAP) sub module and an XML sub module, wherein said SOAP sub-module is configured to: encapsulate messages based on a SOAP protocol and implement data communication based on a HTTP protocol;
said IMP module is configured to transfer said XML sub module to complete an analysis function of messages.

9. The Web Service component of claim 7 or 8, wherein, said Web Service equipment is a service provider or a service requester.

10. A method for implementing a Web Service, and the method comprising:
an Integrated Management Port (IMP) module constructing an Extensible Markup Language (XML) message according to a configured integrated management configuration file obtained according to a WSDL file, and sending the XML message to a Hypertext Transfer Protocol (HTTP) module;
said HTTP module performing a Simple Object Access Protocol (SOAP) encapsulation on received said XML message constructed by said IMP module and sending said XML message to a correspondent equipment based on a Hypertext Transfer Protocol (HTTP); said HTTP module receiving an XML message sent from the correspondent equipment based on the HTTP protocol and forwarding the XML message to said IMP module; and
said IMP module analyzing said XML message sent by said correspondent equipment and forwarded by said HTTP module according to the integrated management configuration file.
